# EUROPEAN PATENT APPLICATION

(11) **EP 2 840 272 A2**
(43) Date of publication of application: **25.02.2015**
(21) Application number: 14172751.1
(22) Date of filing: 17.06.2014
(51) Int. Cl.: F16C 41/00, F16C 17/10

(54) **Electrical conductor for bearing used on actuation system for aircraft lift assisting devices**

(30) Priority: 12.07.2013 US 201313940305; 27.05.2014 US 201414287572
(71) Applicant: Roller Bearing Company of America, Inc., Oxford, CT 06478 (US)
(72) Inventor: Swartley, Curtis M., 06790 Torrington (US); Fredericksen, Arnold E., 06057 New Hartford (US); Gyuricsko, Frederick S., 06790 Torrington (US); Marek, Jesse D., 06098 Winsted (US); Cunningham, Michael J., 06790 Torrington (US)
(74) Representative: Seemann & Partner

(57) **Abstract**

An electrical conductor for a bearing includes an electrically conductive spring ring (859,859') having a split therein that creates electrical communication between the retaining ring (851) and the ring (810).The spring ring has a plurality of first electrical contact surfaces in electrical communication with a plurality of second electrical contact surfaces. The plurality of second electrical contact surfaces are positioned radially outward from the plurality of first electrical contact surfaces. The plurality of first electrical contact surfaces and the plurality of second electrical contact surfaces are movable relative to one another.

## Description

### RELATED APPLICATIONS

This application claims priority from the U.S. application with the official file number US 14/287,572, filed on May 27, 2014, which in turn claims the priority of the U.S. application with the official file number US 13/940,305, filed on July 12, 2013. The entire contents of both applications are incorporated herein by reference.

### BACKGROUND OF THE INVENTION

### FIELD OF THE INVENTION

This invention relates to lined track roller bearing assemblies used within an actuation system of an edge of a wing of an aircraft assembly, and more particularly to an electrical conductor for use in the lined track roller bearing assemblies.

### DESCRIPTION OF THE RELATED ART

It is well known to use bearings to reduce friction between moving parts of a mechanical assembly. Similarly, it is well known to use bearings that roll on a fixed track to extend a first component from a second component. One implementation of such a track style bearing is within a wing of an aircraft. For example, fixed wing aircraft typically include slats movably arranged along a leading edge of each wing and flaps movably arranged along a trailing edge of each wing. By selectively extending, retracting, and deflecting the slats and flaps aerodynamic flow conditions on a wing are influenced so as to increase lift generated by the wing during takeoff or decrease lift during landing. For example, during take-off the leading edge slats are moved forward to extend an effective chord length of the wing and improve lift. During flight, the leading edge slats and trailing edge flaps are placed in a retracted position to optimize aerodynamic conditions.

Generally speaking, leading edge slat designs employ a series of roller style bearings that guide fixed tracks to extend the leading edge slats in order to increase lift at slow speed for landing and takeoff. The tracks may have multiple configurations such as, for example, general I-beam and PI-beam shapes. Since the tracks themselves are typically not overly robust in their construction, multiple load conditions may be realized by the track roller bearings. Similarly, side load rollers or pins typically slide against the track to assist in centering the main rollers on the track. The wing also includes actuation systems for positioning the slats and flaps. Actuation systems include, for example, drive motors (e.g., hydraulic or electric drive motors), drive shafts and other bearings such as spherical bearings, bushings and linkage bearings that assist in deployment and retraction of the slats and flaps. As can be appreciated, aircraft wing designs are being continually developed as engineers seek to improve aircraft performance while increasing system capabilities. Newer designs are tending to increase the number of systems employed within a wing cross section. Accordingly, space within the wing cross section is at a premium. Therefore, it is desirable to improve performance characteristics of components (e.g., to reduce maintenance) within the wing while also minimizing space needed for such components.

Based on the foregoing, it is the general object of this invention to provide an improved bearing for use in crucial applications.

### SUMMARY OF THE INVENTION

The present invention resides in one aspect in an actuation system for deploying and retracting a lift assisting device of a wing of an aircraft. The actuation system includes a track pivotally coupled to the lift assisting device, a shaft rotating in response to flight control signals to deploy or retract the lift assisting device, means for actuating the lift assisting device between a retracted position and a deployed position along an arcuate path, a plurality of track roller bearings and a plurality of side roller bearings. The roller bearings rotatably contact the track to guide the track along the arcuate path. In one embodiment, the track roller bearings are comprised of an outer ring, a split inner ring and split liners disposed between bearing surfaces of the outer and the inner rings. The split inner ring is configured for accommodating deflection and bending of a mounting pin coupling the track roller bearing in proximity to the track. In another embodiment, the track roller bearings are comprised of an outer race, an inner race and needle roller elements.

In one embodiment, the means for actuating includes a gear track coupled to the track and a pinion gear coupled to the shaft. The pinion gear has gear teeth that engage the gear track. When the shaft rotates in a first direction the pinion gear engages the gear track to move the lift assisting device from the retracted to the deployed position along the arcuate path. When the shaft rotates in a second direction the pinion gear engages the gear track to move the lift assisting device from the deployed position to the retracted position along the arcuate path. In another embodiment, the means for actuating includes an actuator arm coupled to the track and an actuator lever coupled to the shaft and to the actuator arm. When the shaft rotates in the first direction the actuator lever drives the actuator arm to move the track and the lift assisting device from the retracted to the deployed position along the arcuate path. When the shaft rotates in the second direction the actuator lever drives the actuator arm to move the track and the lift assisting device from the deployed position to the retracted position along the arcuate path.

In still another embodiment, each of the plurality of track roller bearings are comprised of an outer ring having inner bearing surfaces, an inner split ring having a first portion and a second portion, each of the first and second portions having outer bearing surfaces, and a plurality of liners disposed between the inner bearing surfaces of the outer ring and the outer bearing surfaces of the inner ring. Each of the inner rings is comprised of 17-4PH steel and each of the outer rings is comprised of AISI Type 422 stainless steel. In one embodiment, each of the outer rings is comprised of AISI Type 422 stainless steel with a special nitriding hardening process.

In one embodiment, there is provided an actuation system for deploying and retracting a lift assisting device of a leading edge of a wing of an aircraft including a track pivotally coupled to the lift assisting device. The track has first and second outer surfaces and side surfaces. The actuation system includes a shaft rotationally coupled within the wing of the aircraft and operable, in response to flight control signals, to deploy or retract the lift assisting device. The actuation system includes an actuator for actuating the lift assisting device, coupled to the shaft, between a retracted position to a deployed position along an arcuate path. The actuation system includes a plurality of track roller bearings rotatably contacting the first and second outer surfaces of the track to guide the track along the arcuate path. The plurality of track roller bearings includes one or more lined track roller assembly.

In one embodiment, an electrical conductor for a bearing defines an annular base and is manufactured from an electrically conductive material. The electrical conductor includes a first electrical connector positioned proximate a first portion of the annular base. The electrical conductor includes a second electrical connector positioned proximate a second portion of the annular base. The second electrical connector defines one or more contact edges extending away from the annular base. The contact edge is configured for sliding electrical contact with the bearing.

In one embodiment, an actuation system for deploying and retracting a lift assisting device of a leading edge of a wing of an aircraft includes a track pivotally coupled to the lift assisting device. The track has first and second outer surfaces and side surfaces. The actuation system includes a shaft rotationally coupled within the wing of the aircraft and operable, in response to flight control signals, to deploy or retract the lift assisting device. The actuation system includes means for actuating the lift assisting device, coupled to the shaft, between a retracted position and a deployed position along an arcuate path. The actuation system includes a plurality of track roller bearings rotatably contacting the first and second outer surfaces of the track to guide the track along the arcuate path. Each of the track roller bearings has an outer ring and an inner ring positioned at least partially in the outer ring. The plurality of track roller bearings includes one or more one lined track roller assemblies. Each of the lined track roller assemblies has a liner disposed between the outer ring and the inner ring. Each of the lined track roller assemblies has an electrical conductor that defines an annular base. The electrical conductor is manufactured from an electrically conductive material. The electrical conductor has a first electrical connector positioned proximate a first portion of the annular base. The electrical conductor has a second electrical connector positioned proximate a second portion of the annular base. The first electrical conductor is secured to one of the outer ring and the inner ring and is in electrical communication therewith. The second electrical connector extends away from the annular base and defines a contact edge that is in sliding electrical contact with the other of the inner ring and the outer ring.

There is disclosed herein an electrical conductor for a bearing that includes an electrically conductive spring ring having a split therein. The spring ring has a plurality of first electrical contact surfaces in electrical communication with a plurality of second electrical contact surfaces. The plurality of second electrical contact surfaces are positioned radially outward from the plurality of first electrical contact surfaces. The plurality of first electrical contact surfaces and the plurality of second electrical contact surfaces are movable relative to one another.

The present invention resides in one aspect in an actuation system for deploying and retracting a lift assisting device of a wing of an aircraft. The actuation system includes a track pivotally coupled to the lift assisting device. The track has first and second surfaces. A plurality of track roller bearings rotatably contacts the first and second surfaces of the track to guide the track along an arcuate path. Each of the track roller bearings has at least one outer ring and an inner ring positioned at least partially in the at least one outer ring. The plurality of track roller bearings includes at least one lined track roller assembly. Each of the lined track roller assemblies has a liner disposed between the outer ring and the inner ring. An electrical conductor extends between the outer ring and the inner ring. The electrical conductor includes an electrically conductive spring ring having a split therein. The spring ring has a plurality of first electrical contact surfaces in electrical communication with a plurality of second electrical contact surfaces. The plurality of second electrical contact surfaces are positioned radially outward from the plurality of first electrical contact surfaces. The plurality of first electrical contact surfaces and the plurality of second electrical contact surfaces are movable relative to one another.

### BRIEF DESCRIPTION OF THE DRAWINGS

FIG. 1 is a plan view of a wing of an aircraft illustrating a plurality of slat panels located at a leading edge of the wing;
FIG. 2 is a side cross-sectional view of the wing of FIG. 1 taken along line 2-2 illustrating one of the slat panels in a deployed and a retracted position;
FIG. 3 is a front, partial cross-sectional view of a portion of the wing illustrating an actuation system for a slat panel, in accordance with one embodiment of the present invention;
FIG. 4 is a cross-sectional view of a split type lined track roller bearing in accordance with one embodiment of the present invention;
FIG. 5 is a front, partial cross-sectional view of a portion of the wing illustrating side guide roller bearings in accordance with one embodiment of the present invention;
FIG. 6A is a front, partial cross-sectional view of a portion of the wing illustrating an actuation system for a slat panel, having non-split type lined track roller assemblies;
FIG. 6B is an enlarged view of one embodiment of the lined track roller of the present invention;
FIG. 6C is an enlarged view of another embodiment of the lined track roller of the present invention;
FIG. 6D is an enlarged view of another embodiment of the lined track roller of the present invention;
FIG. 7 is a cross-sectional view of a track roller bearing in accordance with one embodiment of the present invention;
FIG. 8 is a plan view of a wing of an aircraft illustrating a plurality of slat panels located at a leading edge of the wing and having lined track roller bearings assemblies;
FIG. 9A is a front, partial cross-sectional view of a portion of the wing illustrating lined side guide roller bearings in accordance with one embodiment of the present invention;
FIG. 9B is a front, partial cross-sectional view of a portion of the wing illustrating lined side guide roller bearings having an electrical conductor secured thereto in accordance with one embodiment of the present invention;
FIG. 10A is a front, partial cross-sectional view of one end of the split or non-split type lined track roller bearings of FIGS. 4 and 6A having a conductive shield thereon;
FIG. 10B is a front, partial cross-sectional view of one end of the split or non-split type lined track roller bearings of FIGS. 4 and 6A having another embodiment of a conductive shield thereon;
FIG. 11 is a top view of the shield of FIG. 10 taken across line 11-11 of FIG. 10A;
FIG. 12A is a front, partial cross-sectional view of one end of the split or non-split type lined track roller bearings of FIGS. 4 and 6A having another embodiment of a conductive shield thereon;
FIG. 12B is a front, partial cross-sectional view of one end of the split or non-split type lined track roller bearings of FIGS. 4 and 6A having another embodiment of a conductive shield thereon;
FIG. 13 is a top view of the shield of FIG. 12 taken across line 13-13 of FIG. 12A;
FIG. 14 is a front, partial cross-sectional view of one end of the split or non-split type lined track roller bearings of FIGS. 4 and 6A having another embodiment of a conductive shield thereon;
FIG. 15 is another embodiment of a shield for the split or non-split type lined track roller bearings of FIGS. 4 and 6A;
FIG. 16A is another embodiment of a lined track roller bearing have a two piece outer ring;
FIG. 16B is another embodiment of a lined track roller bearing having a one piece outer ring and a one piece inner ring;
FIG. 16C is another of a lined track roller bearing having a one piece outer ring and a one piece inner ring;
FIG. 16D is another embodiment of a lined track roller bearing having a one piece outer ring;
FIG. 17A is front view of an electrical conductor for use in the bearing of FIG 16A;
FIG. 17B is a cross sectional view of the electrical conductor of FIG. 17A taken across line 17B-17B;
FIG. 17C is a cross sectional view of the electrical conductor of FIG. 17A taken across line 17C-17C of FIG. 17A;
FIG. 18 is a cross sectional view of a portion of the lined track roller bearing of FIGS. 16A and 16B taken across line 18-18;
FIG. 19 is an enlarged view of the detail B portion of the lined track roller bearing of FIGS. 16A and 16B;
FIG. 20 is a front view of another embodiment of the retaining ring of the lined track roller bearing of FIGS. 16A and 16B;
FIG. 21 is a cross sectional view of the retaining ring of FIG. 20 taken across line 20-20;
FIG. 22 is an enlarged view of a portion of the retaining ring of FIG. 21;
FIG. 23A is a front view of an axial spring ring;
FIG. 23B is a side view of the axial spring ring of FIG. 23A viewed from line 23B-23B; and
FIG. 23C is a cross sectional view of a portion of a track roller bearing of FIG. 19, shown with the axial spring ring of FIGS 23A and 23B disposed therein.

### DETAILED DESCRIPTION OF PREFERRED EMBODIMENTS OF THE INVENTION

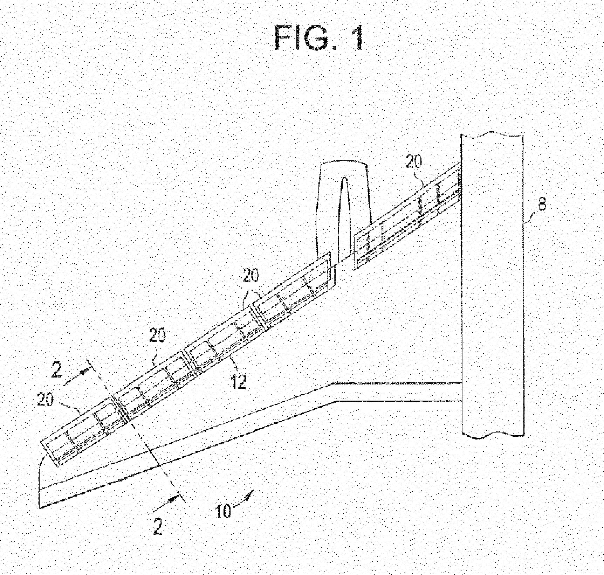

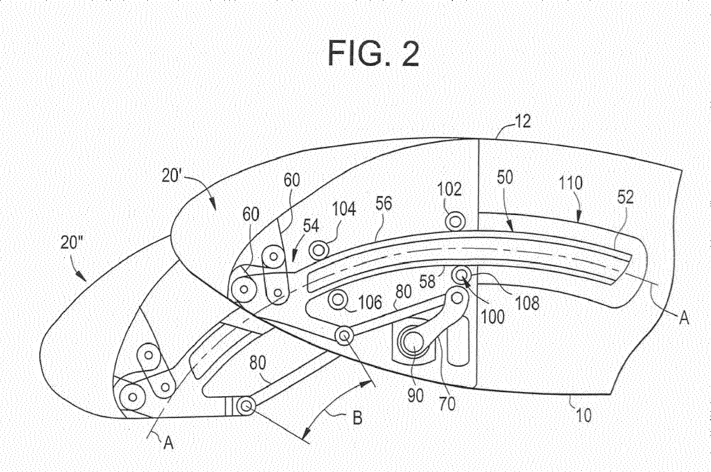

FIG. 1 provides a plan view of a leading edge section 12 of a wing 10 of an aircraft 8. The wing 10 includes a plurality of slat panels 20 deployed along the leading edge 12 of the wing 10. As described herein, an actuation system selectively extends and retracts the slat panels 20 relative to the leading edge 12 in response to flight control signals, as is generally known in the art. FIG. 2 is a partial cross-sectional view of the wing 10 taken along line 2-2 of FIG. 1 and illustrates one of the leading edge slats 20 in a retracted position 20' and in an extended position 20". As shown in FIG. 2, in the retracted position (e.g., flight position) the slat 20' is located against the leading edge 12 of the wing 10 and in the deployed position (e.g., take-off and landing position) the slat 20" is deployed downwardly and forwardly away from the leading edge portion 12 of the wing 10 thus increasing a surface area of the wing 10 to vary the wing's lift-enhancing characteristics.

An actuation system 40 of each slat 20 includes a track 50 extending along an arcuate axis A from a rear portion 52 to a forward portion 54. It should be appreciated that the track 50 may have multiple configurations such as, for example, an I-beam shape and a PI-beam shape. Generally speaking, webbing that constitutes support elements of the track is not overly robust. As such, multiple load conditions are experienced at the track during operation that may be carried and distributed by roller style bearings, as are described herein, to, for example, the wing structure of the aircraft.

As shown in FIG. 2, the forward portion 54 of the track 50 is pivotally coupled to an interior surface of the slat 20. In one embodiment, the track 50 is coupled to the slat 20 by means of, for example, linkage bearings 60. The actuation system 40 also includes an actuator lever 70. The actuator lever 70 is coupled to the track 50 via an actuator arm 80. The actuator lever 70 is also coupled to a shaft 90. As is generally known in the art, the shaft 90 extends along the leading edge section 12 of the wing 10 and operates a plurality of actuator levers (similar to lever 70) coupled to respective ones of the plurality of slat panels 20 in response to flight control commands to extend the slats when rotating in a first direction and to retract the slats 20 when rotating in a second direction.

A plurality of track roller bearings 100 are disposed about a first outer surface 56 and a second outer surface 58 of the track 50. The track roller bearings 100 are in rotational contact with the outer surfaces 56 and 58 of the track 50 to guide the track 50 in its arcuate path along axis A during deployment and retraction. The path of travel of the slat 20 is illustrated in FIG. 2 by arrow B. As shown in FIG. 2, the plurality of track roller bearings 100 includes a first pair of track roller bearings 102 and 104 and a second pair of track roller bearings 106 and 108. It should be appreciated that it is within the scope of the present invention to include more or less than the illustrated two pairs of roller bearings. For example, three roller bearings may be disposed about one or both of the first outer surface 56 and/or second outer surface 58 of the track 50. As described in detail below, it is also within the scope of the present invention for the plurality of track roller bearings 100 to include rolling element needle style track rollers or self lubricating style track rollers. In one embodiment, a mounting web 110 encloses at least a portion of the track 50. In one embodiment, the mounting web 110 extends into a fuel tank disposed within the wing of the aircraft.

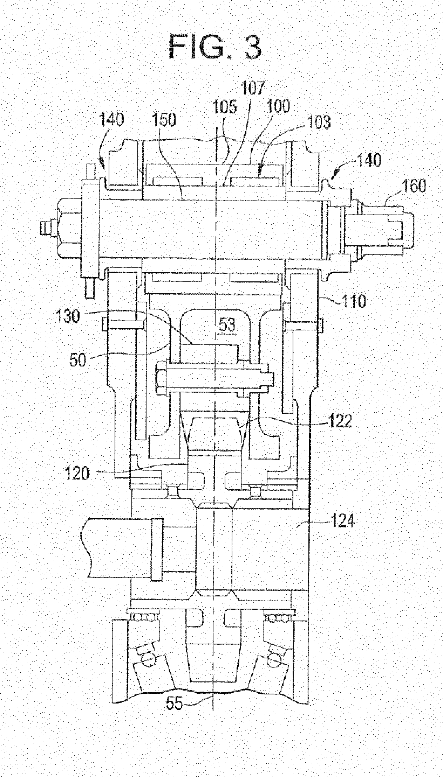

In one embodiment illustrated in FIG. 3, the actuation system 40 includes a pinion gear 120 having teeth 122 that drive a gear track 130 disposed within an interior portion 53 of the track 50. Preferably, the gear track 130 is positioned on a vertical centerline 55 of the track 50. The pinion gear 120 is coupled to a shaft 124 (such as the shaft 90) that rotates in response to flight control commands. As the shaft 124 and the pinion gear 120 rotate, a drive force is provided to the gear track 130 for driving the track 50 along axis A between one of the retracted position 20' and the extended position 20" (FIG. 2). As shown in FIG. 3, the track roller bearing 100 is coupled to the mounting web 110 about the track 50. For example, as shown in FIG. 3, the track roller bearing 100 is coupled to the mounting web 110 above the track 50.

As shown in FIG. 2, the plurality of track roller bearings 100 are coupled to the mounting web 110 about the first and second outer surfaces 56 and 58 of the track 50 to support and guide the track 50 during deployment and retraction. In one embodiment, illustrated in FIG. 3, the track roller 100 is coupled to the mounting web 110 using opposing bushings 140, a mounting pin 150 and a nut 160. In one embodiment, the opposing bushings 140 are comprised of eccentric bushings and the nut 160 is comprised of a castellated nut to allow adjustment to the track 50 at fit-up. As shown in FIG. 3, the track roller bearing 100 includes a plurality of needle roller elements 103 (e.g., two rows of needle rollers in a double channel design). The needle roller elements 103 are lubricated with grease such as, for example, Aeroshell 33, Mobil 28, Aerospec 200 or Aeroplex 444 as is required by predetermined maintenance procedures. In one embodiment, an outer ring 105, an inner ring and 107 and needle rollers 103 of the track roller bearings 100 are comprised of hardened stainless steel such as, for example, 440C, 52100, 422 stainless with a special nitriding process (AeroCres®)(AEROCRES is registered trademark of RBC Aircraft Products, Inc., Oxford, Connecticut USA), XD-15NW, and Cronidur 30.

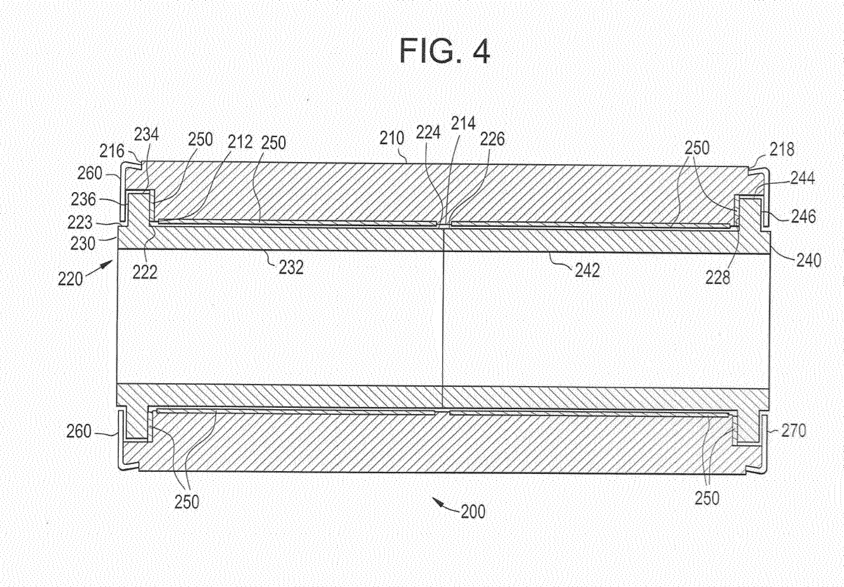

In another embodiment, illustrated in FIG. 4, the track roller bearing 100 is comprised of a lined split type track roller assembly 200 including an outer ring 210 and an inner ring 220. The inner ring 220 is a split ring including a first portion 230 and a second portion 240. In one embodiment, the first portion 230 and the second portion 240 include respective body portions 232 and 242 as well as head portions 234 and 244. The head portions 234 and 244 include flanges 236 and 246, respectively. In accordance with the present invention, the split ring configuration of the first portion 230 and the second portion 240 due to their ability to deflect relative to one another, accommodate potential deflection and/or bending of the mounting pin 150 from stresses that may be encountered during, for example, aircraft takeoff and landing. As can be appreciated, unless accounted for a bending of the mounting pin 150 may result in high friction or binding of the track roller 100 or 200 and a failure to deploy or retract slats in response to flight control commands. The flanges 236 and 246 control axial motion of the outer ring 210 to substantially eliminate contact of the outer ring 210 and the opposing bushings 140 utilized to mount the track roller 100 and 200 within the mounting web 110.

As shown in FIG. 4, the lined track roller assembly 200 may also include liners 250 disposed between bearing surfaces 212, 214 of the outer ring 210 and bearing surfaces 222, 224, 226 and 228 of the inner ring 220. In one embodiment, the liners 250 are constructed of polytetrafluoroethylene (commercially available under the designation TEFLON®)(TEFLON is a registered trademark of E.I. DuPont De Nemours and Company, Wilmington, Delaware USA), polyester, graphite, fabric impregnated with a polymer, urethane, polyimide, epoxy, phenolic or other type of resin. In one embodiment, the liners 250 are molded and are comprised of polytetrafluoroethylene (TEFLON®), polyester, graphite, fibers in a thermosetting composite resin made from polyester, urethane, polyimide, epoxy, phenolic or other type of resin. In one embodiment, the outer ring 210 and the inner ring 220 is comprised of hardened stainless steel such as, for example, 440C, 52100, Custom 455^{®}, Custom 465^{®} (CUSTOM 455 and CUSTOM 465 are registered trademarks of CRS Holdings, Inc., Wilmington, Delaware, USA), and corrosion resistance steel such as 17-4PH, 15-5PH and PH13-8Mo.

In one embodiment, the lined track roller assembly 200 also includes shields 260 and 270 disposed about shoulder portions 216 and 218 of an outer diameter of the outer ring 210 and extending to an outer diameter 223 of the inner ring 220. As shown in FIG. 4 the shield 260 is spaced apart from the flange 236 and the shield 270 is spaced apart from the flange 246 by a small distance, the magnitude of which is suitable to prevent debris from entering therebetween. The inventors have discovered that the shields 260 and 270 reduce friction and discourage dust and other contaminates from entering and compromising contact between the bearing surfaces 212, 214 of the outer ring 210 and bearing surfaces 222, 224, 226 and 228 of the inner ring 220.

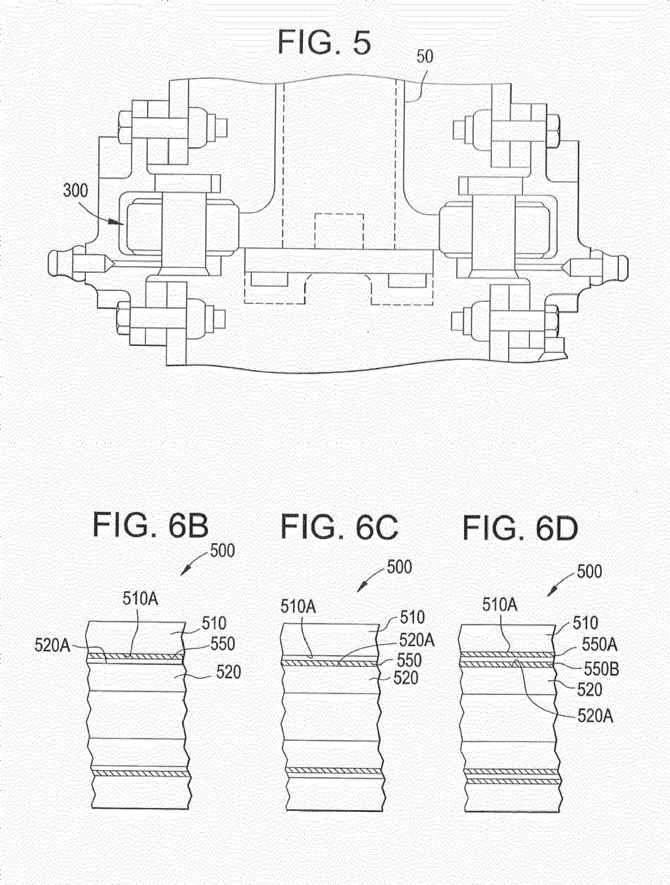

In one embodiment, illustrated in FIG. 5, a plurality of side guide roller bearings 300 are disposed about opposing sides of the track 50. The side guide roller bearings 300 are in rotational contact with the opposing side surfaces of the track 50 to guide the track 50, along with track roller bearings 100 and 200, in its arcuate path along axis A during deployment and retraction. In one embodiment, the plurality of side guide roller bearings 300 are in rotational contact with wear pads affixed to the track 50. In one embodiment, the plurality of side guide roller bearings 300 include needle roller bearings having outer races, inner races and needle rollers constructed of hardened stainless steel such as, for example, 440C, 52100, 422 stainless with a special nitriding process (e.g., the aforementioned AeroCres^{®} process), XD-15NW, and Cronidur 30. In yet another embodiment, the side guide roller bearings 300 include end washers and seals. The end washers are constructed of, for example, 52100 steel with cadmium plate or 420 stainless steel. The seals are made from a thermoplastic such as, for example, an acetal copolymer with lubricant fillers or Delrin^{®}/Celcon^{®} (DELRIN is a registered trademark of E.I. DuPont De Nemours and Company, Wilmington, Delaware USA, and CELRON is a registered trademark of CNA Holdings, Inc., Summit, New Jersey USA). The seals retain grease and prevent of ingress dirt, dust and other contaminates into the bearings 300. In one embodiment, needle roller elements of the bearings 300 are lubricated with grease such as, for example, Aeroshell 33, Mobil 28, Aerospec 200 or Aeroplex 444 as is required by predetermined maintenance procedures.

As described above, both the rolling element track bearings 100 and self lubricating track roller bearings 200 include a hard outer ring or race to work in harmony with the mating track 50 that the bearings roll against. In one embodiment, the track 50 is comprised of titanium or steel. In one embodiment, the track 50 may be coated with a material such as, for example, tungsten carbide, although a coating is not a requirement of the present invention.

In addition to a unique bearing mounting configuration, another aspect of the present invention is related to the materials from which the bearings are manufactured. Historically, lined track bearings are manufactured from relatively soft materials. For example, inner rings are typically comprised of precipitation-hardening martensitic stainless steel such as, for example, 17-4PH steel, having a Rockwell hardness in a range of about HRc 30s to about HRc 40s, while outer rings are typically comprised of precipitation-hardening stainless steel such as, for example, custom 455 steel, having a Rockwell hardness in the range of about HRc 40s. Outer rings may also be manufactured as through hardened high strength steel having a Rockwell hardness of in the range of about HRc 50s to avoid flats that can occur. 440C steel has also been used for outer rings. The inventors have discovered that, in certain applications, it is beneficial to maintain inner rings manufactured from 17-4PH steel, and that it is desirable to manufacture outer rings of AISI Type 422 stainless steel. In one embodiment, each of the outer rings is comprised of AISI Type 422 stainless steel with a special nitriding hardening process (e.g., the aforementioned AeroCres^{®} process). Outer rings comprised of AISI Type 422 stainless steel with AeroCres^{®} hardening are preferred for superior corrosion resistance and performance as compared to conventional outer rings manufactured of 440C steel.

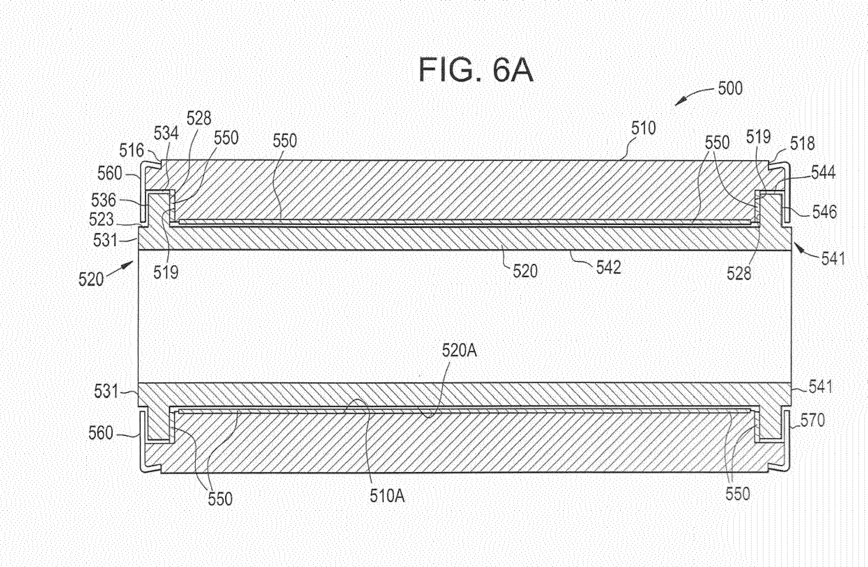

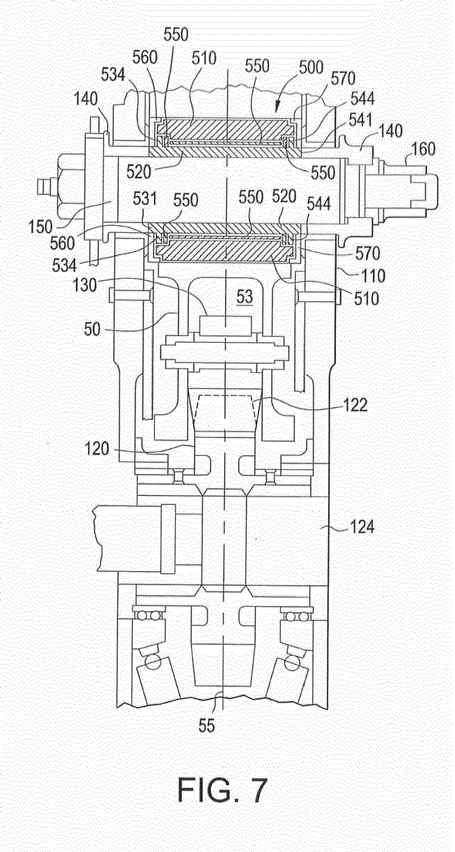

In another embodiment, illustrated in FIG. 6A, the non-split type lined track roller bearing 500 is similar to the track roller bearing of FIG. 4, thus like elements have been assigned similar element numbers with the first numeral 2 being replaced with the numeral 5. The lined track roller bearing 500 is a non-split type lined track roller assembly 500 including an outer ring 510 and an inner ring 520. The inner ring 520 is disposed at least partially in the outer ring 510. The outer ring 510 defines an inner bearing surface 510A and the inner ring 520 defines an outer bearing surface 520A. The inner ring 520 extends continuously from a first end 531 to a second end 541. Thus the lined track roller bearing 500 has no split and no separate first portion 230 and second portion 240, as shown in FIG. 4. The inner ring 520 defines a continuous body portion 542 as well as head portions 534 and 544 proximate the first end 531 and the second end 541, respectively. The head portions 534 and 544 include flanges 536 and 546, respectively. The flanges 536 and 546 control axial motion of the outer ring 510 to substantially eliminate contact of the outer ring 510 with the opposing bushings 540 utilized to mount the track roller 500 within the mounting web 310, illustrated in FIG. 7. While the lined track rollers 500 are shown and described as having no split and no separate first portion 230 and second portion 240, the present invention is not limited in this regard, as the lined track rollers 500 having a split configuration as shown in FIG. 4 may also be employed without departing from the broader aspects defined herein.

As shown in FIGS. 6A and 6B, the non-split type lined track roller assembly 500 includes liners 550 disposed between the outer ring 510 the inner ring 520. As shown in FIGS. 6A and 6B, the liner 550 is disposed on, for example, secured to (e.g., by an adhesive or by bonding) the inner bearing surface 510A of the outer ring 510 and the liner 550 slidingly engages the outer bearing surface 520 of the inner ring 520. A liner 550 is also disposed between an inside facing lateral surface 528 of the each of the head portions 534 and 544 and an outwardly facing lateral surface 519 of the outer ring 510. The lined track roller assembly 500 also includes shields 560 and 570 disposed about shoulder portions 516 and 518 of an outer diameter of the outer ring 510 and extending to an outer diameter 523 of the inner ring 520. As shown in FIG. 6A the shield 560 is spaced apart from the flange 536 and the shield 570 is spaced apart from the flange 546 by a small distance, the magnitude of which is suitable to prevent debris from entering therebetween. The liners 550 are manufactured from materials similar or identical to those described above for the liners 250. While the liner 550 is shown in FIGS. 6A and 6B and described as being disposed on the inner bearing surface 510A, the present invention is not limited in this regard as the liner 550 may be disposed on the outer bearing surface 520A of the inner ring 520 and the liner 550 slidingly engages the inner bearing surface 510A of the outer ring 510, as shown in FIG. 6C. In another embodiment, as shown in FIG. 6D, a liner 550A, similar to the liner 550, is disposed the inner bearing surface 510A of the outer ring 510 and a liner 550B, similar to the liner 550, is disposed in the outer bearing surface 520A of the inner ring 520, as shown in FIG. 6D, wherein the liners 550A and 550B slidingly engage one another.

The mounting web 510 of FIG. 7 is similar to the mounting web of FIG. 3; therefore like elements for the track roller bearing 500 have been assigned similar element numbers with the first numeral 2 being replaced with the numeral 5. As shown in FIG. 7, the track roller bearing 500 is coupled to the mounting web 110 above the track 50. With reference to FIG. 1, one or more of the track roller bearings 102, 104, 106 and 106 are lined track rollers 500 as illustrated in FIG. 5. The non-split type lined track roller 500 is coupled to the mounting web 110 using opposing bushings 140, a mounting pin 150 and a nut 160.

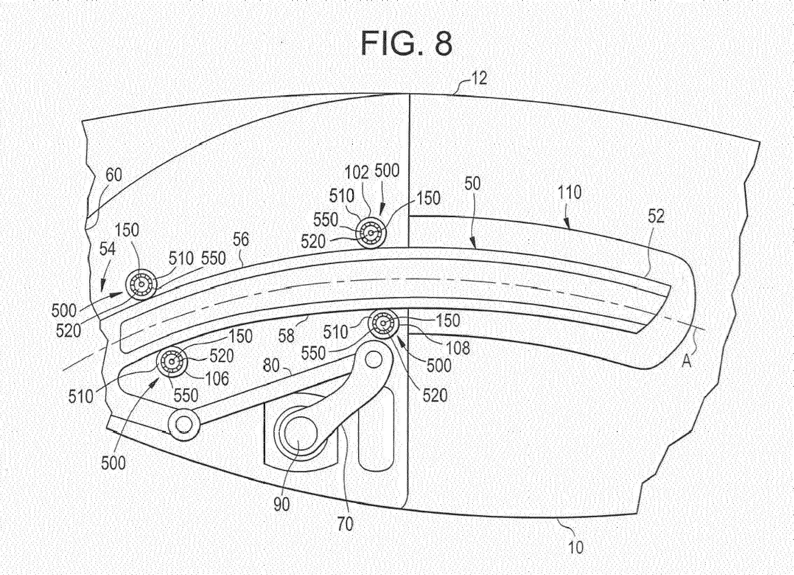

Referring to FIG. 8, in one embodiment, all of the track roller bearings 102, 104, 106 and 108 are lined track rollers 500 similar to those as illustrated in detail in FIG. 6A, 6B, 6C and/or 6D.

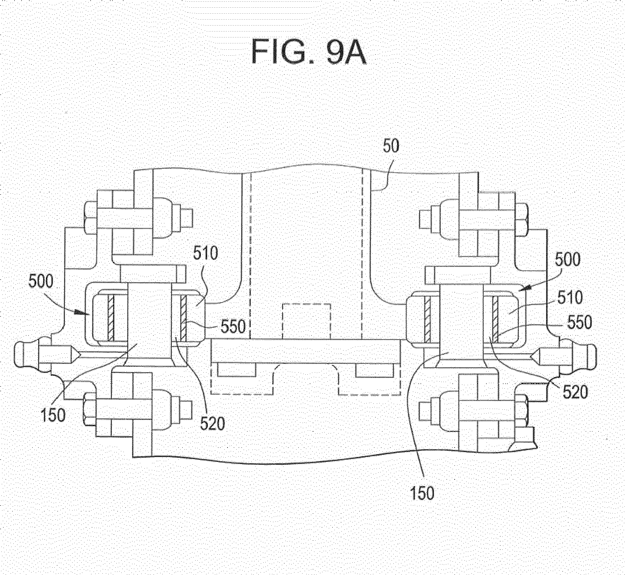

Referring to FIG. 9A, the plurality of side guide roller bearings 500 are disposed about opposing sides of the track 50 in a manner similar to that described above with reference to the side guide track roller 300 of FIG. 5. However, one or more of the side guide roller bearings 500 are lined roller bearings similar to the lined track roller bearings 500 shown in FIGS. 6A, 6B, 6C, and/or 6D. In one embodiment, all of the side guide roller bearings 500 are lined roller bearings similar to the lined track roller bearings 500.

Surprisingly, use of the lined track rollers 500 in the actuation system of leading edge flaps on an aircraft has benefit over bearings having needle rollers. Actuation systems are limited as to how much force they can apply. Since lined track rollers have a higher friction coefficient than needle roller track rollers, one skilled in the art of bearing design for aircraft applications would be discouraged from using a system that includes lined track rollers as it will take more force to actuate the system. However, one surprising benefit of lined track rollers is to move away from track rollers that require grease. By moving away from rollers that require grease, heavy hydraulic greasing systems do not have to be included on the aircraft and this benefit of reduced weight and complexity has been discovered overcome the determinant of higher friction compared to the lower friction needle rollers.

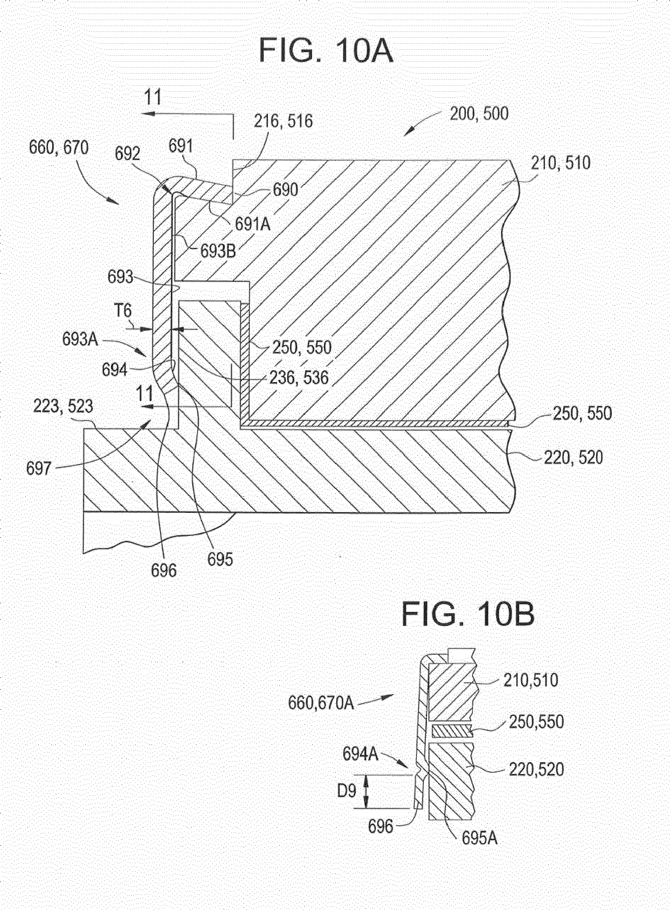

Referring to FIG. 10A, the split ring lined track roller bearing 200 of FIG. 4 and the non-split ring lined track roller bearing 500 of FIG. 6A each have a shield 660 positioned proximate the shoulder portions 216, 516 and a shield 670 positioned proximate the shoulder portions 218, 518, similar to that described herein with reference to FIGS. 4 and 6A for the shields 260, 270, 560 and 570. The shields 660 and 670 are similar to one another. However, FIG. 10A shows the shields 660 and 670 positioned on the shoulder portions 216, 516 for simplicity of illustration, rather than showing the shields positioned on the shoulder portions 218 and 518. The split ring lined track roller bearing 200 of FIG. 4 includes a liner 250 positioned between the outer ring 210 and the inner ring 220; and the non-split ring lined track roller bearing 500 includes a liner 550 positioned between the outer ring 510 and the inner ring 520. The liners 250 and 550 are manufactured from a dielectric material that is an electrical insulator (e.g., PTFE), thereby precluding electrical communication between the respective outer ring 210, 510 and the respective inner ring 220, 520, via the respective liner 250, 550.

Referring to FIG. 10A, the shields 660, 670 are electrical conductors manufactured from an electrically conductive material, such as a metal. The shields 660, 670 are generally annular and have a base portion 693 that extends radially outward from an inner circumferential edge 696. The inner circumferential edge 696 defines a generally circular opening 697 in each of the shields 660, 670. The inner circumferential edge 696 extends a thickness T6 to a contact edge 695 of the respective shield 660, 670. The contact edge 695 is an electrical connector that is positioned proximate a first portion 693A (e.g., proximate the inner circumferential edge 696) of the annular base 693. The contact edge 695 is angled axially inward toward the flange 236, 536 via a bend 694. The contact edge 695 slidingly engages an axially outward facing surface of the flange 236, 536. A radially outer portion 691 of the respective shield 660, 670 defines another electrical connector positioned proximate a second portion of the annular base 693. For example, the radially outer portion 691 is secured to and is in electrical communication with the shoulder portion 216, 516. The radially outer portion 691 is angled axially inward toward the shoulder portion 216, 516 at a second bend 692 so that an annular edge 690 of the respective shield 660, 670 engages the respective shoulder portion 216, 516. In one embodiment, the annular edge 690, portions of an underside 691A of the radially outer portion 691 and/or portions of an underside 693B of the base portion 693 constitute an electrical connector for providing electrical communication with the outer ring 210, 510.

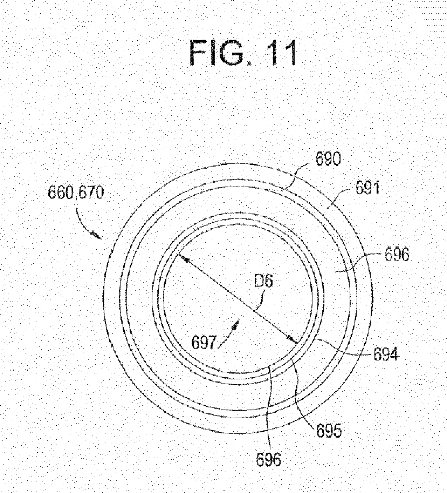

As shown in FIG. 11, the contact edge 695 and bend 694 are continuously and entirely formed around 360 degrees of the circumference of the inner diameter D6 of the respective shield 660, 670. The shields 660, 670 provide electrical communication between the outer ring 210, 510 and the inner ring 220, 520 via the engagement between the annular edge 690 and the respective shoulder portion 216, 516; through the conductive shield 660, 670; and via the sliding engagement between the contact edge 695 and the axially outward facing surface of the flange 236, 536.

While the annular edge 690, portions of an underside 691A of the radially outer portion 691 and/or portions of an underside 693B of the base portion 693 are shown and described as providing electrical communication with the outer ring 210, 510; and the contact edge 695 is shown and described as being the electrical connector that is positioned proximate the first portion 693A (e.g., proximate the inner circumferential edge 696 as shown in FIG. 10A), the present invention is not limited in this regard as electrical communication between portions of the shield 660, 670 may occur at any location on the shields 660A, 670A (see FIG. 10B) including but not limited to a position at a bend 694B that creates a bulged contact edge 695A in the shield at a distance D9 from the inner circumferential edge 696, as shown in FIG. 10B.

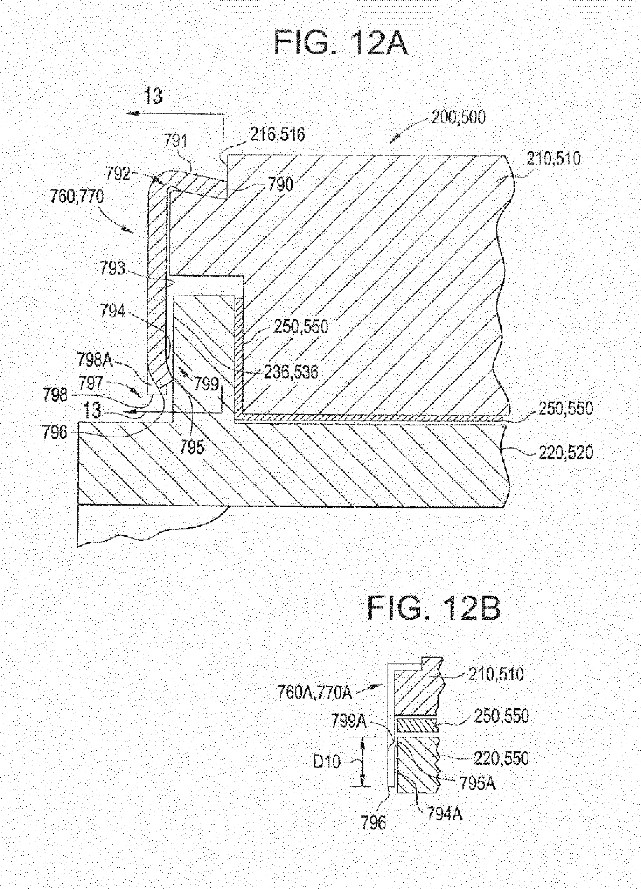

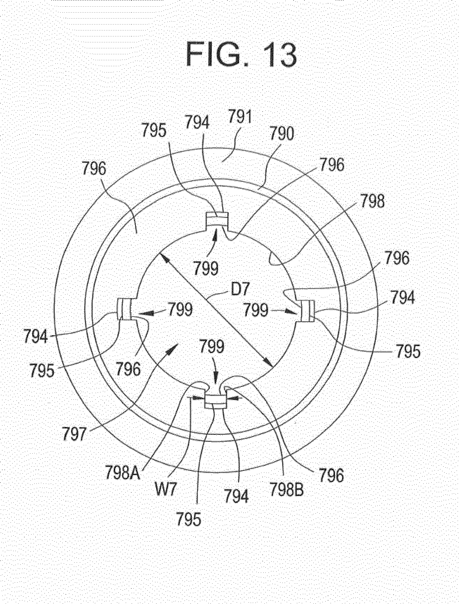

Referring to FIGS. 12A and 13, the shields 760, 770 are similar to the shields 660, 670 of FIGS. 10A, 10B and 11, with the exception that the contact edge 695 and bend 694 are not continuously formed around 360 degrees of the circumference of the inner diameter D6 of the respective shield 760, 770. Instead, the shields 760, 770 have four tabs 799 that are angled axially inward toward the respective flange 236, 536 at a bend 794 such that a contact edge 795 of each of the tabs 799 slidingly engages the axially outer facing surface of the flange 236, 536. The tabs 799 are shown symmetrically spaced at 90 degree increments around an inner circumference defined by an inner diameter D7. Each of the tabs 799 has a base defined at the bend 794 and sides that are separated from (e.g., via two radial extending cuts) a peripheral portion of the shield 760, 770 adjacent to the inner diameter D7. Each of the tabs 799 extends a width W7 between opposing faces 798A and 798B of the peripheral portion of the shield 760, 770. The shields 760, 770 provide electrical communication between the outer ring 210, 510 and the inner ring 220, 520 via the engagement between the annular edge 790 and the respective shoulder portion 216, 516; through the conductive shield 760, 770 and via the sliding engagement between the contact edge 795 and the axially outward facing surface of the flange 236, 536.

While the shields 760, 770 are shown and described as having four tabs 799 symmetrically spaced thereon, the present invention is not limited in this regard as any number of tabs positioned in any configuration may be employed. While the tabs 799 are shown and described as being angled axially inward toward the respective flange 236, 536 at the bend 794 such that the contact edge 795 of each of the tabs 799 slidingly engages the axially outer facing surface of the flange 236, 536 at 90 degree increments around an inner circumference defined by an inner diameter D7, the present invention is not limited in this regard as other contact edge configurations may be employed including but not limited to pins or brushes extending from the shield onto the inner ring 220, 520 or tabs 799A may be pierced through the shield at any position such that a contact edge 795A is positioned at any location such as but not limited to a distance D10 from the inner circumferential edge 796, as shown in FIG. 12B.

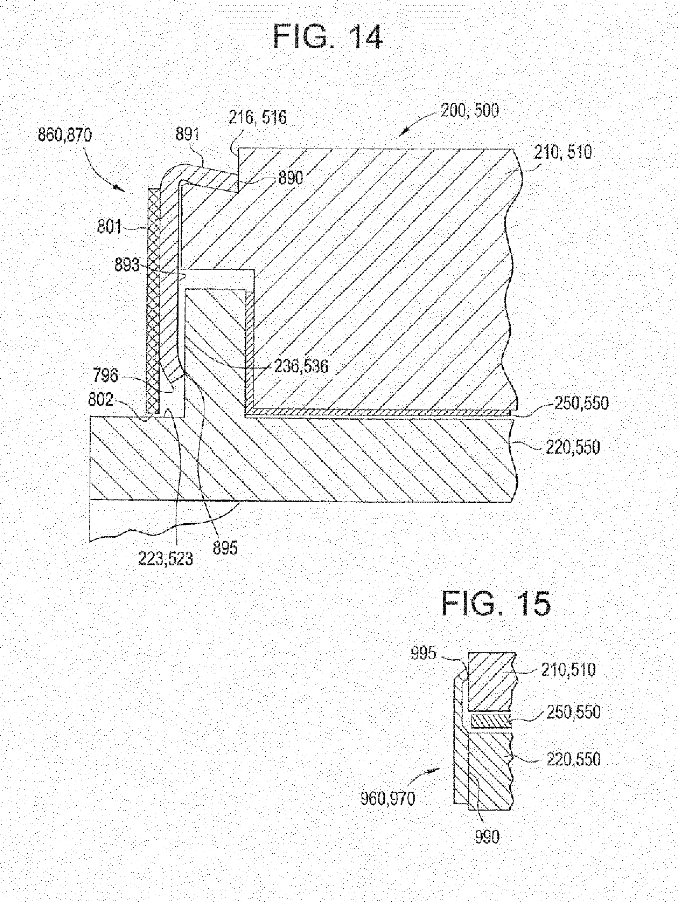

As shown in FIG. 14, the shields 860, 870 are similar to the shields 660, 670 of FIGS. 10A, 10B and 11 or the shields 760, 770 of FIGS. 12A, 12B and 13, with the exception that the shields 860, 870 include a flexible annular seal 801 (e.g., polymer based material, PTFE (Polytetrafluoroethylene), acrylic resin based material, nylon, rubber, Teflon, or the like) positioned on (e.g., adhered to or mechanically secured to) an axially outward facing surface of the shield 860, 870. The seal 801 defines a radially inner peripheral surface 802 that slidingly engages the outer diameter 223, 523 of the inner ring 220, 520 to provide a further barrier preventing debris from reaching the liner 250, 550.

While the shields 660, 670, 760, 770, 860, and 870 are shown and described as having the annular edge 690 of the respective shields 660, 670, 760, 770, 860, and 870 engaged and secured to the respective shoulder portion 216, 516 of the outer ring 210, 510 and the contact edge 695, 795, 895 being in sliding electrical contact with the inner ring 220, 520, the present invention is not limited in this regard as a portion 990 of the shields 960, 970 may be secured to a portion of the inner ring 220, 520 and another portion of the shields 660, 670, 760, 770, 860, and 870 may have a contact edge 995 that is in sliding electrical contact with a portion of the outer ring 210, 510 as shown, for example, in FIG. 15 for the shield 960, 970.

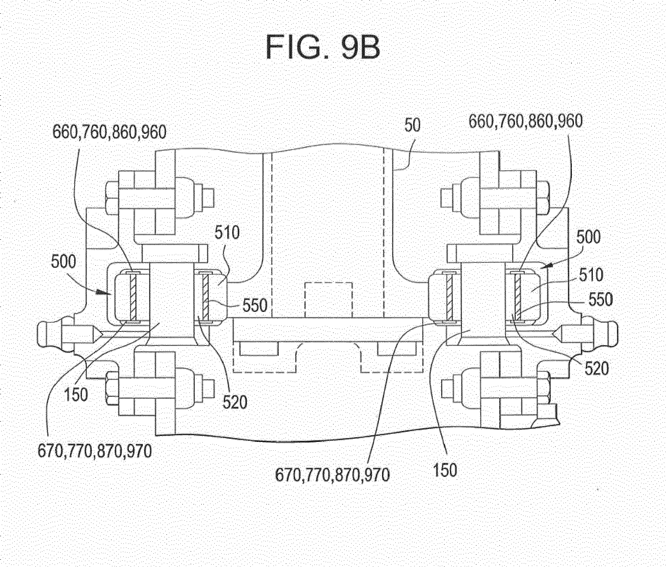

Referring to FIG. 9B, the side rollers 500 are lined roller bearing assemblies having a liner 550 disposed between the inner ring 520 and the outer ring 510. One of the shields 660, 670, 760, 770, 860, 870, 960 or 970 are positioned on one or more or all of the side rollers 500, in a manner and configuration similar to that described herein with reference to FIGS. 10A, 10B, 11, 12A, 12B, 13, 14 and 15.

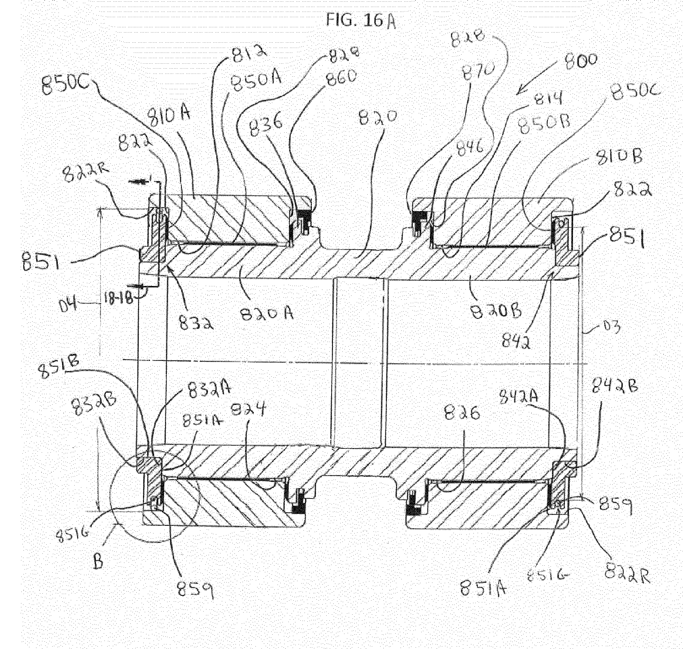

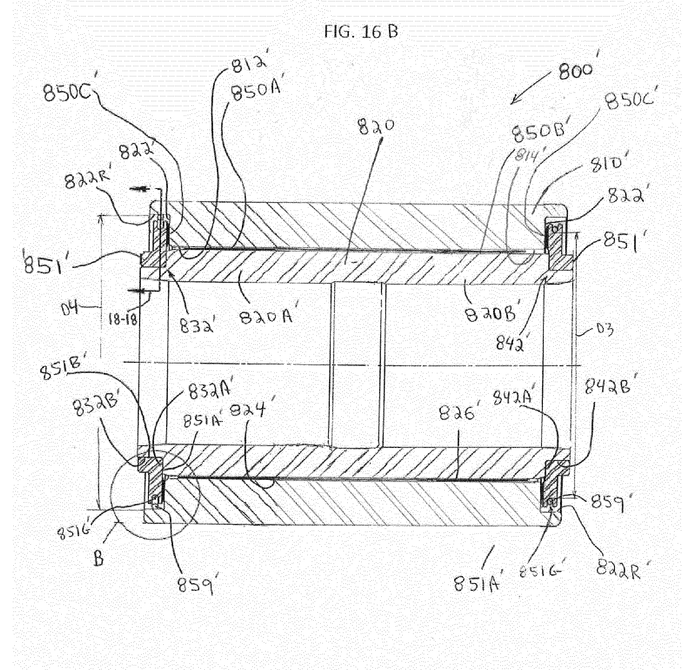

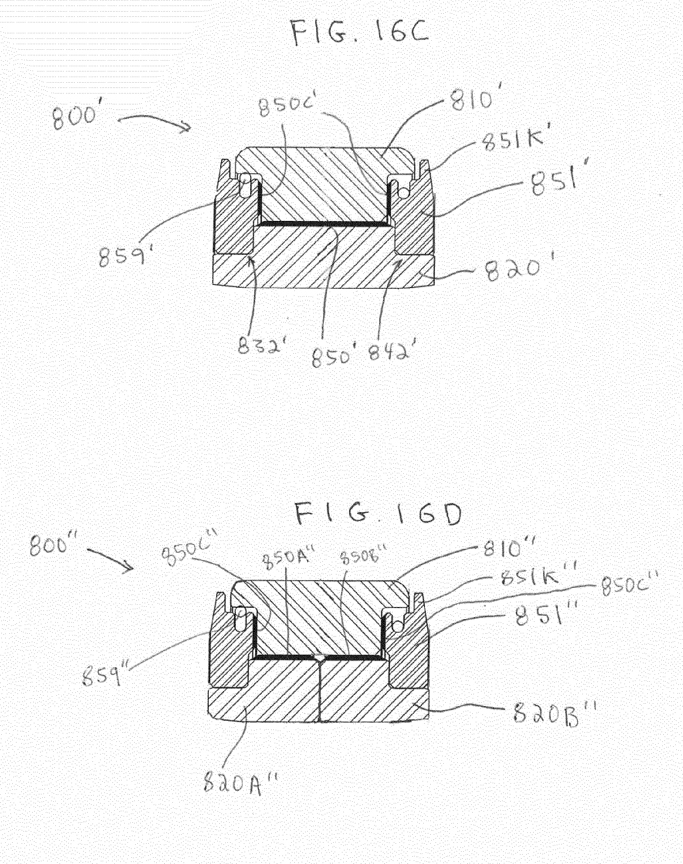

Referring to FIG. 16, a track roller bearing for an actuation system for deploying and retracting a lift assisting device of a wing of an aircraft (see FIG. 1) is generally designated by the numeral 800. The actuation system is similar to the actuation system 40 shown and described herein with reference to FIGS. 2-3, 5, 7, 8, 9A and 9B. The track roller bearing 800 is employed in one or more of the track roller bearings 102, 104, 106 and/or 108 of FIGS. 2 and 8 and/or one or more of the side roller bearings 300 shown and described herein with reference to FIG. 5 and side roller bearings 500 shown and described with reference to FIGS. 9A and 9B. For example, the track 50 is pivotally coupled to the lift assisting device, the track having first and second surfaces 56 and 58, respectively. The track roller bearings 800 are in rotational contact with the outer surfaces 56 and 58 of the track 50 to guide the track 50 in its arcuate path along axis A during deployment and retraction, similar to that shown in FIG. 2 for track roller bearings 102, 104, 106 and 108.

The track roller bearing 800 includes an inner ring 820 having a first inner ring bearing portion 820A and a second inner ring bearing portion 820B. The track roller bearing 800 includes a first outer ring 810A positioned around the first inner ring bearing portion 820A and a second outer ring 810B positioned around the second inner ring bearing portion 820B. Each of the first outer ring 810A and second outer ring 810B has a T-shaped cross section defining a first axial shoulder 822 and a second axial shoulder 828. The first axial shoulder 822 defines a radially inward facing electrical contact surface (e.g., a lip) 822R extending axially outward therefrom. The first outer ring 810A has a radially inward facing surface 812 and the outer ring 810B has a radially inward facing surface 814.The inner ring 820 includes two flanges 836 and 846 extending radially outward from a central portion of the inner ring 820. The first inner ring bearing portion 820A has a first radially outward facing surface 824 and the second inner ring bearing portion 820B has a second radially outward facing surface 826. The first inner ring bearing portion 820A defines a pocket 832 proximate one axial end of the inner ring 820. The second inner ring bearing portion 820B defines a pocket 842 proximate an opposing end of the inner ring 820. The pocket 832 defines an axially outward facing shoulder 832A and a radially outward facing seating surface 832B. The pocket 842 defines an axially outward facing shoulder 842A and a radially outward facing seating surface 842B. In one embodiment, a seal 860 is disposed between the flange 836 and the outer ring 810A and a seal 870 is disposed between the flange 846 and the outer ring 810B.

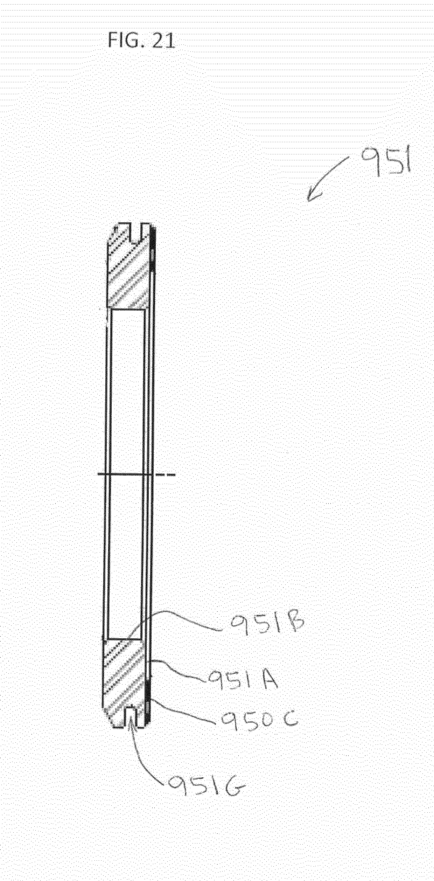

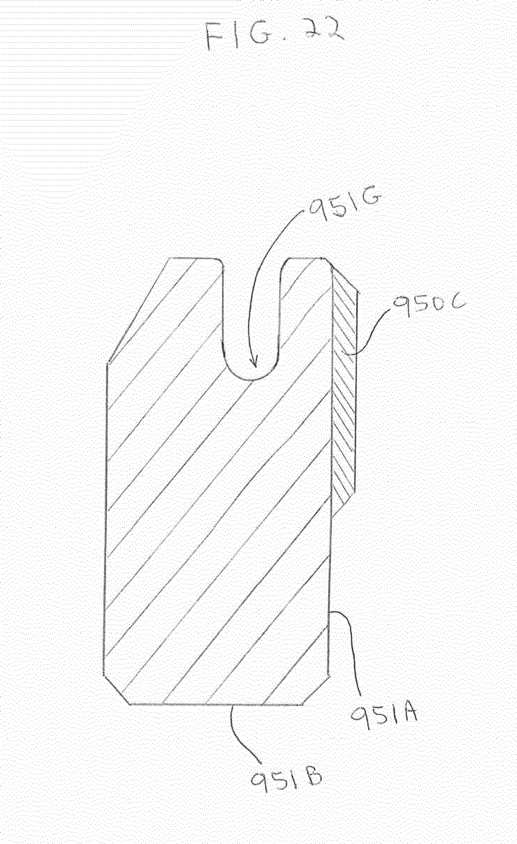

A retaining ring 851 is disposed, for example, press fit, into each of the pockets 832 and 842 in the inner ring 820 to create an electrical conductive path between the inner ring 820 and the retaining ring 851. Each retaining ring 851 defines an axially inward facing abutment surface 851A and a radially inward facing seating surface 851B. A radially inward portion of the axially inward facing abutment surface 851A of one of the retaining rings 851 abuts the axially outward facing shoulder 832A and the radially inward facing seating surface 851B is press fit into the radially outward facing seating surface 832B of the pocket 432. A radially inward portion of the axially inward facing abutment surface 851A of another one of the retaining rings 851 abuts the axially outward facing shoulder 842A and the radially inward facing seating surface 851B is press fit into the radially outward facing seating surface 842B of the pocket 442. In the embodiment shown in FIG. 16A, the retaining ring 851 has an L-shaped cross section. However, the present invention is not limited in this regard as the retaining ring may employ any cross section including but not limited to rectangular washer like cross section as shown and described herein with reference to FIGS. 21-22, a cross section with a radially outward projecting shield as shown in FIGS. 16C and 16D, an electrically conductive insert creating a mechanical interlock between the retaining ring and the inner ring and any other configuration that creates electrical communication between the retaining ring 851 and the inner ring 820.

The retaining ring 851 has a radially outward facing groove 851G extending into and circumferentially around the retaining ring 851 for receiving an electrical conductor 859, as described further herein.

In one embodiment, the track roller bearing 800 is a lined track roller assembly having: 1) a liner 850A disposed between the radially inward facing surface 812 of the outer ring 810A and the first radially outward facing surface 824 of the first inner ring bearing portion 820A; 2) a liner 850B disposed between the radially inward facing surface 814 of the outer ring 810B and the first radially outward facing surface 826 of the first inner ring bearing portion 820B; and/or 3) a liner 850C disposed between the first axial shoulder 822 and the radially outward portion of the axially inward facing abutment surface 851A . The liner 850C is secured to (e.g., adhered to) the radially outward portion of the axially inward facing abutment surface 851A and the liner 850C slidingly engages the first axial shoulder 822. The liner 850A is secured to the radially inward facing surface 812 of the outer ring 810A and slidingly engages the first radially outward facing surface 824 of the first inner ring bearing portion 820A. The liner 850B is secured to the radially inward facing surface 814 of the outer ring 810B and slidingly engages the first radially outward facing surface 826 of the first inner ring bearing portion 820B. However, the present invention is not limited in this regard as the liners 850A and 850B may be arranged as shown for the lined track roller bearing 500 of FIGS. 6C and 6D. In one embodiment, the liner 850C may be secured to the first axial shoulder 822 and slidingly engage the radially outward portion of the axially inward facing abutment surface 851A. The liners 850A, 850B and 850C are configured similar to the liners 250 and 550 described herein.

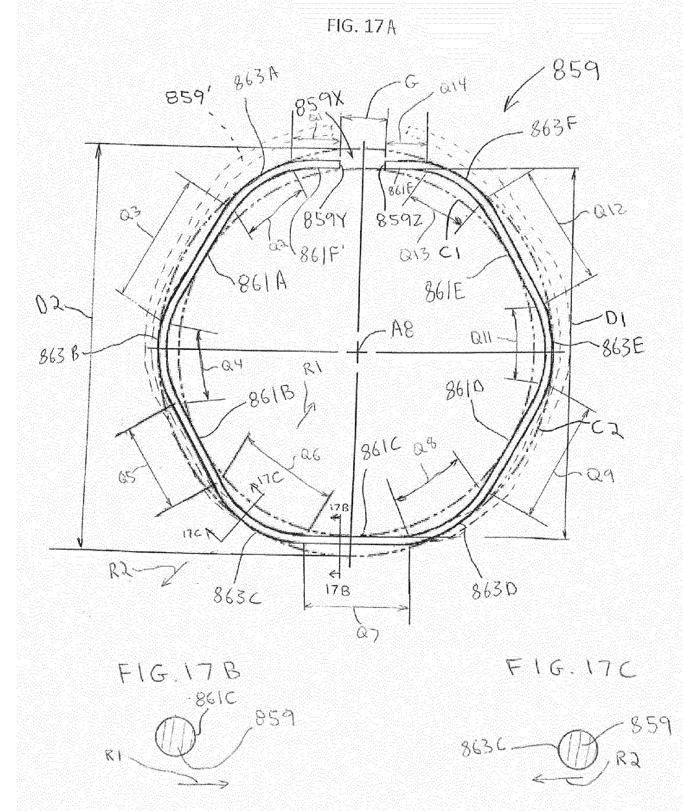

Referring to FIG. 17A, the electrical conductor 859 is an electrically conductive spring ring having a split 859X therein. The split 851X defines a gap G between axial ends 859Y and 859Z of the electrical conductor 859. The electrical conductor 859 is drawn in solid lines to represent a compressed state of the electrical conductor disposed in an annulus of a housing defined by an inside circumferential wall C1 having a diameter D1 and an outside circumferential wall C2 having a diameter D2. The diameter D2 is greater than the diameter D1. The diameter D1 is substantially equal to a diameter D3 (se FIG. 16) measured across bottoms of the groove 851 G. The diameter D2 is substantially equal to an inside diameter D4 (see FIG. 16) measured between diametrically opposite faces of the radially inward facing electrical contact surface 822R (i.e., lip). The electrical conductor 859' is drawn in dashed lines to represent a free state of the electrical conductor.

The electrical conductor 859 (i.e., the spring ring) has a plurality of first electrical contact surfaces positioned around a central axis A8 thereof. For example, seven first electrical contact surfaces 861A, 861B, 861C, 861D, 861E, 861F and 861F' are shown in FIG. 17A. The electrical conductor 859 (i.e., the spring ring) has a plurality of second electrical contact surfaces positioned around the central axis A8 thereof. For example, six second electrical contact surfaces 863A, 863B, 863C, 863D, 863E and 863F are shown in FIG. 17A. The first electrical contact surfaces 861A, 861B, 861C, 861D, 861E, 861F and 861F' are in electrical communication with the plurality of second electrical contact surfaces 863A, 863B, 863C, 863D, 863E and 863F. Each of the plurality of second electrical contact surfaces 863A, 863B, 863C, 863D, 863E and 863F is positioned radially outward from each of the plurality of first electrical contact surfaces 861A, 861B, 861C, 861D, 861E, 861F and 861F'.

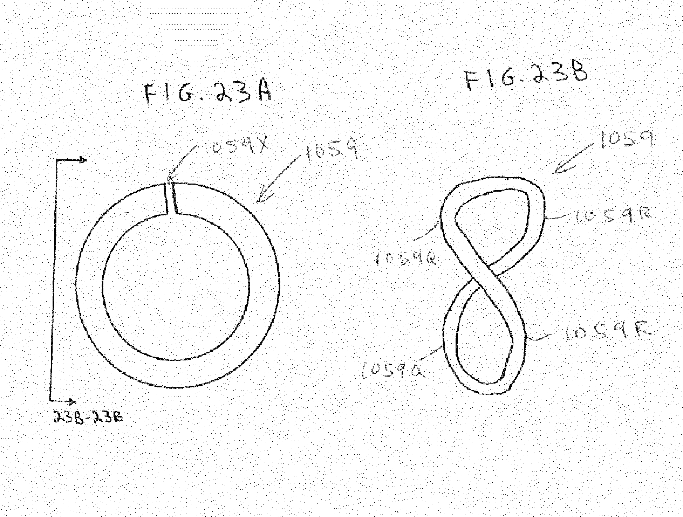

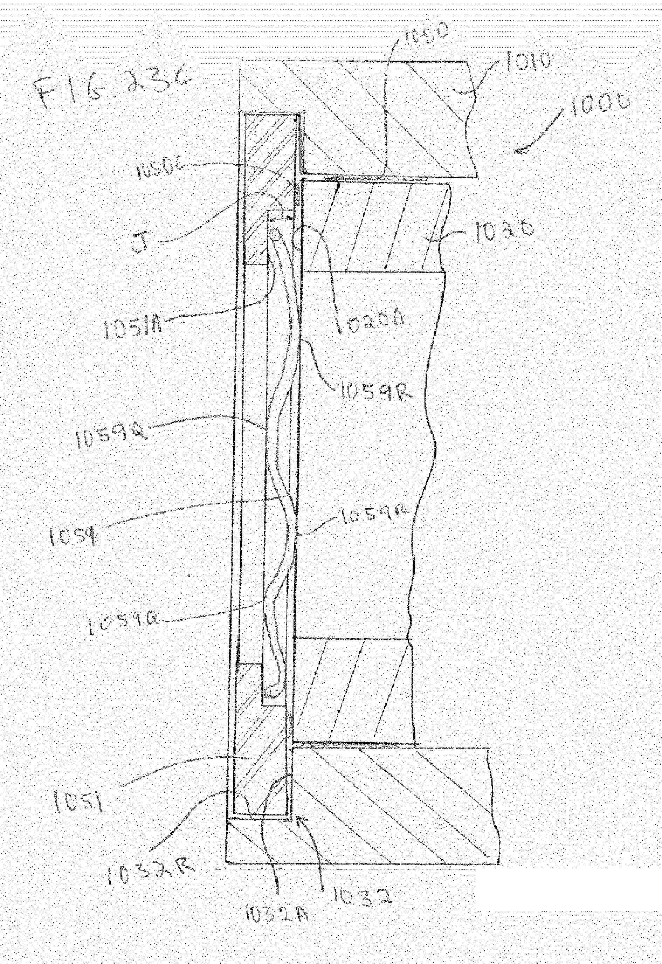

Providing electrical communication through the lined track roller assembly 800 and between the inner ring 820 and the outer rings 810A and 810B provides a means for lightning surge flow through aircraft wing hardware that employs such lined bearings, thereby protecting hardware. This also allows for a means of static electricity to dissipate through the lined track roller assembly 800 the without the need of a ground strap. One particularly well suited application for this concept is leading and trailing edge flap systems for fixed wing aircrafts. The radial direction is chosen for the electrical contact over the axial direction because the radial clearance of the bearing is much less than the axial clearance. However, an axial offset spring ring as shown in FIGS. 23A, 23B and 23C could also be employed using similar concepts discussed herein for the radial spring ring 859.

Each of the plurality of first electrical contact surfaces 861A, 861 B, 861C, 861D, 861 E, 861 F and 861 F' and each of the plurality of second electrical contact surfaces 863A, 863B, 863C, 863D, 863E and 863F are movable relative to one another. For example, each of the plurality of second electrical contact surfaces 863A, 863B, 863C, 863D, 863E and 863F is movable in a radial direction relative to the plurality of first electrical contact surfaces 861A, 861 B, 861C, 861D, 861 E, 861 F and 861 F' in response to loading of the outer ring 81A or 810B with a radially applied force.

As shown in FIG. 17A, each of the plurality of first electrical contact surfaces 861A, 861B, 861C, 861D, 861E, 861F and 861F' has a straight length (i.e., profile) and each of the plurality of second electrical contact surfaces 863A, 863B, 863C, 863D, 863E and 863F is an arcuate length (i.e., profile). One of the plurality of second electrical contact surfaces 863A, 863B, 863C, 863D, 863E and 863F is positioned between respective pairs of the plurality of first electrical contact surfaces 861A, 861B, 861C, 861D, 861E, 861F and 861F'. While six of the arcuate second electrical contact surfaces 863A, 863B, 863C, 863D, 863E and 863F are shown and described, the present invention is not limited in this regard as any number of arcuate second electrical contact surfaces may be employed including but not limited to 3 to 8.

In one embodiment, the first electrical contact surfaces 861A, 861B, 861C, 861D, 861 E, 861 F and 861 F' have a straight length of about 0.2 to 0.4 inches. While the first electrical contact surfaces 861A, 861B, 861C, 861D, 861E, 861F and 861F' are described as having a straight length of about 0.2 to 0.4 inches the present invention is not limited in this regard as straight lengths of any magnitude may be employed including but not limited to less than 0.2 inches and greater than 0.4 inches.

In one embodiment, the arcuate second electrical contact surfaces 863A, 863B, 863C, 863D, 863E and 863F have a bend radius of curvature of 0.05 to 0.45 inches and an arc length of 0.05 to 0.50 inches. While the arcuate second electrical contact surfaces 863A, 863B, 863C, 863D, 863E and 863F are described as having a bend radius of curvature of 0.05 to 0.45 inches and an arc length of 0.05 to 0.50 inches, the present invention is not limited in this regard as any suitable bend radius of curvature and arc length may be employed without departing from the broader aspects disclosed herein.

In one embodiment, the electrical conductor 859 is manufactured from a suitable electrical conductor having a spring rate sufficient to maintain the electrical contact of the electrical conductor with the groove 851 G and the radially inward facing electrical contact surface 822R (i.e., lip). Suitable materials for the electrical conductor 859 include but are not limited to phosphor bronze, stainless steel, steel, conductive polymer, and brass.

As shown in FIG. 17B each of the plurality of first electrical contact surfaces 861A, 861B, 861C, 861D, 861E, 861F and 861F' has an arcuate cross section, for example, a circular cross section. As shown in FIG. 17C, each of the plurality of second electrical contact surfaces 863A, 863B, 863C, 863D, 863E and 863F have an arcuate cross section, for example, a circular cross section. However, it is contemplated that any suitable cross section can be employed including but not limited to square, rectangular and oblong.

As shown in FIGS. 17A, 18 and 19 the electrical conductor 859 is positioned in the groove 851 G of the retaining ring 851 so that the plurality of first electrical contact surfaces 861A, 861 B, 861C, 861D, 861 E, 861 F and 861 F'engage arcuate surfaces of the groove 851 G. In one embodiment, the groove 851 G has a flat bottom and the plurality of first electrical contact surfaces 861A, 861 B, 861C, 861D, 861 E, 861 F and 861 F'engage the flat bottom of the groove 851 G. In one embodiment, the plurality of first electrical contact surfaces 861A, 861 B, 861C, 861D, 861 E, 861 F and 861 F' slidingly engage the groove. The plurality of second electrical contact surfaces 863A, 863B, 863C, 863D, 863E and 863F of the outer ring 810A slidingly engage the radially inward facing electrical contact surface 822R (i.e., lip) of the outer ring 810A. The plurality of second electrical contact surfaces 863A, 863B, 863C, 863D, 863E and 863F of the outer ring 810B slidingly engage the radially inward facing electrical contact surface (i.e., lip) 822R of the outer ring 810B.

The electrical conductor 859 of the outer ring 810A extends between the outer ring 810A and the inner ring 820. The electrical conductor 859 of the outer ring 810B extends between the outer ring 810B and the inner ring 820. The electrical conductor 859 is elastically compressed between the radially inward facing electrical contact surface (i.e., lip) 822R and the groove 851 so that the plurality of second electrical contact surfaces 863A, 863B, 863C, 863D, 863E and 863F are biased radially outward (in the direction of the arrow R2) to maintain electrical contact with the radially inward facing electrical contact surface (i.e., lip) 822R while the plurality of first electrical contact surfaces 861A, 861 B, 861C, 861D, 861 E, 861 F and 861 F' maintain electrical contact with the groove 851 G by biasing the plurality of first electrical contact surfaces onto the groove 851 G in the direction of the arrow R1. In one embodiment, the electrical conductor 859 has an elastic compression range of 0.001 to 0.025 inches in a radial direction. While the electrical conductor 859 is described as having elastic compression range of 0.001 to 0.025 inches in a radial direction, the present invention is not limited in this regard as any elastic compression range may be employed including but not limited to less than 0.001 inches and greater than 0.025 inches.

Referring to FIGS. 16B and 16C, the track roller bearing 800' is similar to the track roller bearing 800 illustrated in FIG. 16A except that the track roller bearing 800' has a one piece outer ring 810' and no shields positioned comparably to the shields 860 and 870 shown in FIG. 16A . Therefore, like elements are given like reference numbers with a prime (') notation thereafter. FIG. 16B illustrates a two piece liner 850A' and 850B' while FIG. 16C illustrates a one piece liner 850'. In the embodiment illustrated in FIG. 16C, the retaining ring 851' includes a radially outward extending shield 851 K' extending therefrom.

Referring to FIG. 16D, the track roller bearing 800" is similar to the track roller bearing 800' of FIG. 16C, except that the inner ring is a split inner ring 820A" and 820B" and the liner is a two piece liner 850A" and 850B". Therefore, like elements are given like reference numbers with a double-prime (") notation thereafter. The track roller bearing 800" is similar to the track roller bearing 200 of FIG. 4 but including the retaining ring 851" and the electrical conductor 859".

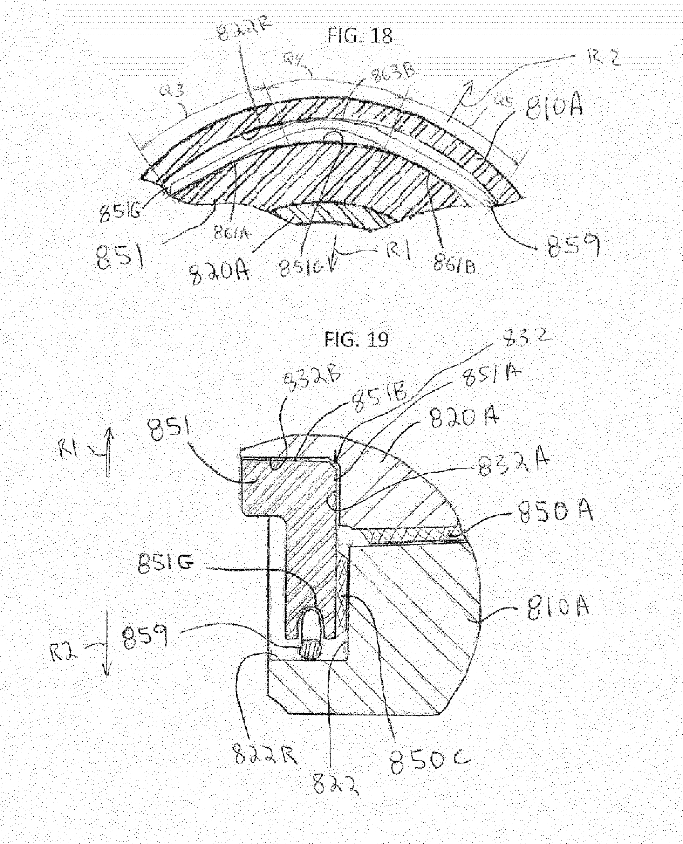

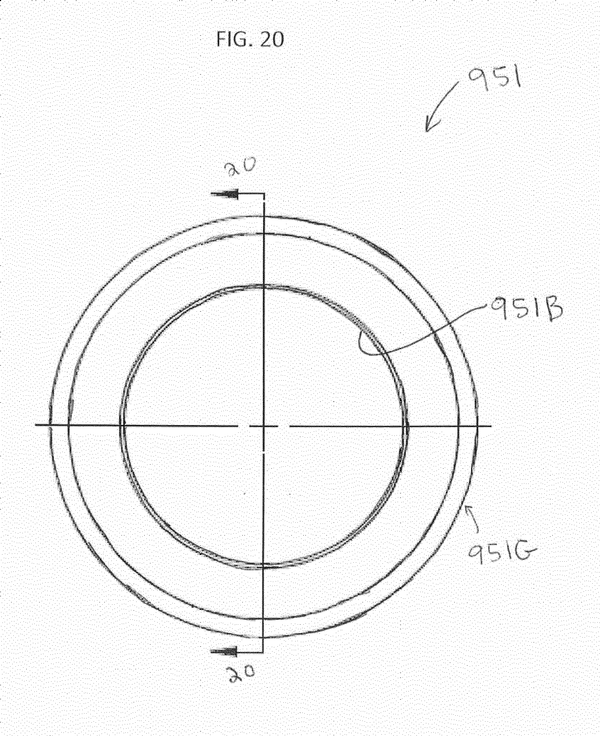

Referring to FIGS. 20-22, the retaining ring 951 is similar to the retaining ring 851 of FIGS. 16 and 19, thus similar element are given similar reference numbers with the first numeral 8 replaced by the numeral 9. The retaining ring 951 is generally flat and washer shaped rather than the L-shaped cross section of the retaining ring 851. The retaining ring 951 is configured to be press fit into each of the pockets 832 and 842 similar to that illustrated in FIGS. 16 and 19. The retaining ring 951 is configured to receive the electrical conductor 859 in the groove 951 G similar to that described herein for the retaining ring 851 and groove 851 G.Referring to FIG. 23C the track roller bearing 1000 is similar to the track roller bearing 800, 800' and 800" of FIGS. 16A, 16B and 16D, respectively. Thus, similar elements are assigned similar reference numbers with the leading numeral 8 replaced with the numeral 10. The track roller bearing 1000 includes an inner ring 1020 disposed in an outer ring 1010. The inner ring 1020 defines axial end faces 1020A which is an electrically conductive contact surface. The outer ring 1010 defines a pocket 1032 having an axially outward facing surface 1032A and a radially inward facing surface 1032R. A retaining ring 1051 is press fit into the pocket 1032 to create electrical communication between the retaining ring 1032 and the outer ring 1010. The retaining ring 1051 has an L-shaped cross section which defines an axially inward facing electrically conductive contact surface 1051A. An electrical conductor 1059 (e.g., an axially compressible spring ring) is compressed between the axial end face 1020A and the axially inward facing electrically conductive contact surface 1051A, thereby creating electrical communication between the retaining ring 1051 and the inner ring 1020. The electrical conductor 1059 is manufactured from a material similar to the electrical conductor 859 described herein with reference to FIG. 16A and 17A.

As illustrated in FIGS. 23A and 23B, the electrical conductor is a substantially annular ring having a wave-like profile in a relaxed state and has a split 1059X extending therethrough. The electrical conductor 1059 is axially compressible. As shown in FIG. 23C, the electrical conductor 1059 has two first electrical contact surfaces 1059Q which are in electrical communication with the axially inward facing electrically conductive contact surface 1051A of the retaining ring 1059. The electrical conductor 1059 has two second electrically conductive contact surfaces 1059R that are in electrical communication with the axial end face 1020A of the inner ring 1020. The electrical conductor 1059 is compressed between the axially inward facing electrically conductive contact surface 1051A and the axial end face 1020A to maintain electrical communication between the retaining ring 1051 and the inner ring 1020. While the electrical conductor 1059 is shown and described as having two first electrical contact surfaces 1059Q and two second electrically conductive contact surfaces 1059R, the present invention is not limited in this regard as any number of first and second electrical contact surfaces may be employed including but not limited to 3 to 8.

Although the invention has been described with reference to particular embodiments thereof, it will be understood by one of ordinary skill in the art, upon a reading and understanding of the foregoing disclosure that numerous variations and alterations to the disclosed embodiments will fall within the spirit and scope of this invention and of the appended claims.

## Claims

1. An electrical conductor for a bearing, the electrical conductor comprising:
an electrically conductive spring ring having a split therein, the spring ring having a plurality of first electrical contact surfaces in electrical communication with a plurality of second electrical contact surfaces;
the plurality of second electrical contact surfaces being positioned radially outward from the plurality of first electrical contact surfaces; and
the plurality of first electrical contact surfaces and the plurality of second electrical contact surfaces being movable relative to one another.

2. The electrical conductor of claim 1, wherein the plurality of second electrical contact surfaces are biased radially outward.

3. The electrical conductor of claim 1, wherein the plurality of first electrical contact surfaces have an arcuate cross section or wherein the plurality of first electrical contact surfaces are substantially straight.

4. The electrical conductor of claim 1, wherein the plurality of first electrical contact surfaces are positioned around a central axis of the electrically conductive spring ring and/or wherein the plurality of second electrical contact surfaces are positioned around a central axis of the electrically conductive spring ring.

5. The electrical conductor of claim 1, wherein the plurality of second electrical contact surfaces have an arcuate cross section or wherein the plurality of second electrical contact surfaces have an arcuate profile.

6. The electrical conductor of claim 1, wherein one of the plurality of first electrical contact surfaces is positioned between two of the plurality of second electrical contact surfaces.

7. An actuation system for deploying and retracting a lift assisting device of a wing of an aircraft, the actuation system comprising:
a track pivotally coupled to the lift assisting device, the track having first and second surfaces;
a plurality of track roller bearings rotatably contacting the first and second surfaces of the track to guide the track along an arcuate path, each of the track roller bearings having at least one outer ring and an inner ring positioned at least partially in the at least one outer ring;
the plurality of track roller bearings including at least one lined track roller assembly, each of the lined track roller assemblies having a liner disposed between the outer ring and the inner ring; and
an electrical conductor extending between the outer ring and the inner ring;
the electrical conductor comprising an electrically conductive spring ring having a split therein, the spring ring having a plurality of first electrical contact surfaces in electrical communication with a plurality of second electrical contact surfaces;
the plurality of first electrical contact surfaces engaging a portion of the inner ring and the plurality of second electrical contact surfaces engaging a portion of the outer ring; and
the plurality of first electrical contact surfaces and the plurality of second electrical contact surfaces being movable relative to one another.

8. The actuation system of claim 7, wherein the at least one of the first and second surfaces comprises a side surface and at least one of the plurality of track roller bearings is a side track roller bearing having a liner disposed therein.

9. The actuation system of claim 7, wherein
the inner ring defines at least one pocket defining a radially outward facing lip and an axially outward facing shoulder;
a retaining ring seated in the pocket, the retaining ring defining a radially outward facing groove;
at least a portion of each of the plurality of first electrical contact surfaces engage the groove;
the outer ring defines a radially inwardly facing lip;
at least a portion of each of the plurality of second electrical contact surfaces engage the inwardly facing lip.

10. The actuation system of claim 9, wherein the electrically conductive spring ring is compressed between the groove and the inwardly facing lip.

11. The actuation system of claim 9, wherein the at least a of each of the plurality of first electrical contact surfaces slidingly engages the groove and/or wherein the at least a portion of each of the plurality of second electrical contact surfaces slidingly engages the inwardly facing lip.

12. The actuation system of claim 9, wherein an axially inward facing surface of the retaining ring has a side liner secured thereto and/or wherein an axially inward facing surface of the retaining ring slidingly engages a side liner secured to a portion of the outer ring.

13. The actuation system of claim 7, wherein the electrically conductive spring ring is in electrical communication with the outer ring and the inner ring.

14. The actuation system of claim 7, wherein the plurality of second electrical contact surfaces are positioned axially outward from the plurality of first electrical contact surfaces.

15. An electrical conductor for a bearing, the electrical conductor comprising:
an electrically conductive spring ring having a split therein, the spring ring having a plurality of first electrical contact surfaces in electrical communication with a plurality of second electrical contact surfaces;
the plurality of second electrical contact surfaces being positioned axially outward from the plurality of first electrical contact surfaces; and
the plurality of first electrical contact surfaces and the plurality of second electrical contact surfaces being movable relative to one another.
